# EUROPEAN PATENT APPLICATION

(11) **EP 1 645 678 A2**
(43) Date of publication of application: **12.04.2006**
(21) Application number: 05016206.4
(22) Date of filing: 26.07.2005
(51) Int. Cl.: D06F 37/22, D06F 37/20

(54) **Washing machine**

(30) Priority: 07.10.2004 KR 2004079939
(71) Applicant: LG Electronics, Inc., Seoul 150-010 (KR)
(72) Inventor: Seo, Hyun Seok, Inchun-si 402-779 (KR); Lim, Hee Tae 2326-603 Seohae Apt. Lilac village, Buchun-si Kyungki-do 420-757 (KR)
(74) Representative: TER MEER - STEINMEISTER & PARTNER GbR

(57) **Abstract**

Disclosed herein is a washing machine. The washing machine comprises at least one damper (60) disposed between a drive part of the washing machine and a cabinet (10) for performing shock-absorbing operation, a damper bracket (61) fixedly attached to the drive part for transmitting vibration or impact to the at least one damper (60), and a revolute joint connection unit connected between the at least one damper (60) and the damper bracket (61). When non-horizontal vibration or impact is transmitted to the at least one damper (60), the damper (60) is rotated by the revolute joint connection unit. Consequently, the shock-absorbing operation is effectively performed.

## Description

### BACKGROUND OF THE INVENTION

### Field of the Invention

The present invention relates to a washing machine, and, more particularly, to a washing machine having dampers each of which has one end connected to one side of a drum in a revolute joint fashion for effectively absorbing vibration generated from a driving part of the washing machine.

### Description of the Related Art

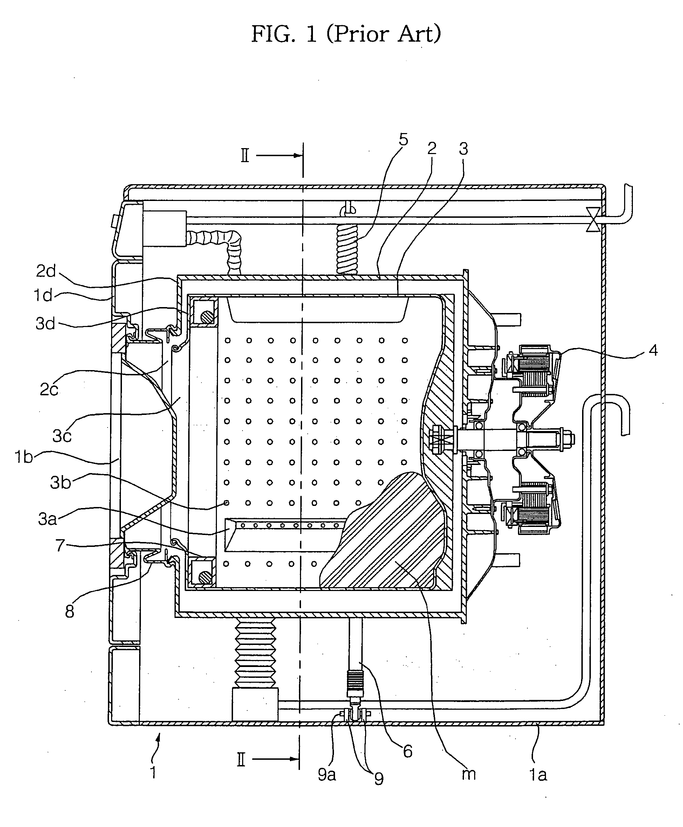

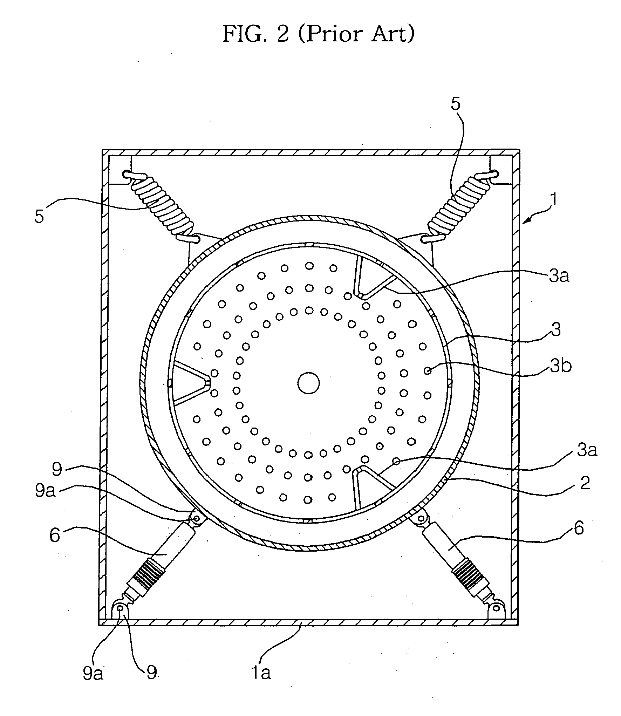

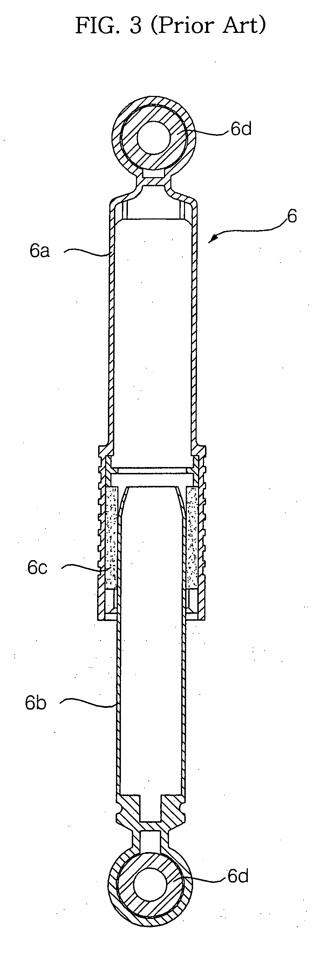

FIG. 1 is a sectional view illustrating the interior structure of a conventional drum type washing machine, FIG. 2 is a sectional view taken along line II-II of FIG. 1, and FIG. 3 is a sectional view illustrating the interior structure of the damper shown in FIG. 1.

As shown in FIGS. 1 and 2, the conventional drum type washing machine comprises: a cabinet 1 having a base 1a and a door 1b; a tub 2 fixedly mounted in the cabinet 1; a drum 3 rotatably mounted in the tub 2 such that laundry m and washing water are shaken by lifters 3a; a motor 4 for rotating the drum 3; and springs 5, dampers 6 and a balancer 7 for attenuating vibration transmitted to the tub 2.

The drum 3 has a plurality of through-holes 3b, through which washing water received in the tub 2 is introduced into the drum 3. The lifters 3a are attached to the inside surface of the drum 3. As the drum 3 is rotated, the lifters 3a lift the laundry m together with the washing water in the drum 3.

The tub 2 is spaced a predetermined distance from the inside surface of the cabinet 1. Opposite sides of the upper end of the tub 2 are connected to the lower surface of the top part of the cabinet 1 via the springs 5. Also, opposite sides of the lower end of the tub 2 are connected to the upper surface of the base 1a via the dampers 6, each of which is hingedly connected to the tub 2 and the base 1a. Vibration transmitted to the cabinet 1 from the tub 2 is attenuated by the springs 5 and the dampers 6.

The door 1b of the cabinet 1 is pivotably connected to a front surface 1d such that the laundry m is put into the drum 3. The tub 2 and the drum 3 are provided at front surfaces 2d and 3d thereof with openings 2c and 3c, respectively, which communicate with a hole (not shown) opened by the door 1b.

Between the front surface 1d of the cabinet 1, to which the door 1b is connected, and the front surface 2d of the tub 2 is disposed a gasket 8 for preventing leakage of washing water. The gasket 8 serves to maintain the seal between the inside surface of the cabinet 1 and the front surface 2d of the tub 2.

The motor 4 is mounted at the rear of the tub 2 for rotating the drum 3 disposed in the tub 2.

The balancer 7 is attached to the drum 3 for balancing the drum 3. The balancer 7 has a predetermined weight, and therefore, the balancer 7 provides centrifugal force to the drum 3 rotated when a dewatering process is performed such that vibration generated from the drum 3 is attenuated by the centrifugal force.

As shown in FIG. 3, each damper 6 of the conventional washing machine comprises: a cylinder 6a connected to the outside surface of the tub 2; a piston 6b connected to the base 1a; and a frictional ring 6c disposed between the cylinder 6a and the piston 6b for generating damping force caused by frictional force.

Specifically, the cylinder 6a is hingedly connected to the tub 2. The connection structure of the cylinder 6a is accomplished as follows.

At the end of the cylinder 6a is formed a hollow part (now shown), which extends in one direction. In the hollow part of the cylinder 6a is inserted a rubber bushing 6d. Similarly, a hollow part (not shown) is formed at the end of the piston 6b, and a bushing 6d is inserted in the hollow part of the piston 6b.

At the tub 2 and the base 1a are formed brackets 9 for fixing the cylinder 6a and the piston 6b, respectively. Each of the brackets 9 has a hole (not shown), through which a pin 9s is inserted.

Into the brackets 9 are inserted the ends of the cylinder 6a and the piston 6b, respectively, and the pins 9a are inserted through the brackets 9 and the rubber bushings 6d inserted in the ends of the cylinder 6a and the piston 6b. As a result, the damper 6 is hingedly connected to the tub 2 and the base 1a.

In the damper 6 connected between the tub 2 and the base 1a, the cylinder 6a and the piston 6b perform a relative motion to attenuate vibration and impact transmitted from the tub 2, and friction is generated at the frictional ring 6c due to the relative motion of the cylinder 6a and the piston 6b. As a result, the vibration and the impact transmitted from the tub 2 are attenuated.

With the dampers 6 of the conventional washing machine, however, vibration and impact generated from the drum 3 are attenuated only due to frictional damping of the frictional rings 6c generated by the relative motion of the cylinders 6a and the corresponding pistons 6b. As a result, vibration and impact generated from the drum 3 are not completely attenuated. Consequently, it is necessary that the springs 5 be provided to further attenuate vibration and impact.

In conclusion, the dampers 6 mounted in the conventional washing machine cannot generate sufficient damping force.

### SUMMARY OF THE INVENTION

Therefore, the present invention has been made in view of the above problems, and it is an object of the present invention to provide a washing machine having dampers that are capable of effectively absorbing vibration and impact generate in several directions.

In accordance with one aspect of the present invention, the above and other objects can be accomplished by the provision of a washing machine comprising: at least one damper disposed between a drive part of the washing machine and a cabinet for performing shock-absorbing operation; a damper bracket fixedly attached to the drive part for transmitting vibration or impact to the at least one damper; and a revolute joint connection unit connected between the at least one damper and the damper bracket.

Preferably, the at least one damper is vertically mounted or inclined.

Preferably, the at least one damper comprises: a piston mechanism connected to the damper bracket via the revolute joint connection unit; a cylinder mechanism connected to the cabinet; a friction member fixed to either the piston mechanism or the cylinder mechanism for generating friction due to a relative motion; and a resilient member for providing a resilient force to the piston mechanism.

Preferably, the revolute joint connection unit comprises: a damper hinge provided at the at least one damper; a bracket hinge provided at the damper bracket such that the bracket hinge is engaged with the damper hinge; and a fixing unit for fixing the damper hinge and the bracket hinge.

Preferably, the fixing unit comprises: a joint pin inserted through the damper hinge and the bracket hinge; and a shock-absorbing member fitted on the outer circumferential surface of the joint pin.

Preferably, the shock-absorbing member is a rubber bushing.

Preferably, the damper hinge is either forcibly inserted into the damper or fixedly attached to the at least one damper by means of a bolt.

Preferably, the bracket hinge is engaged with the damper hinge such that the at least one damper is approximately at a right angle to the damper bracket.

Preferably, the washing machine further comprises: a base bracket mounted at the lower end of the cabinet; a shock-absorbing member attached to the lower end of the at least one damper; and a fixing unit provided at the at least one damper for securely fixing the shock-absorbing member to the at least one damper.

In accordance with another aspect of the present invention, there is provided a washing machine comprising: a cabinet forming the outer appearance of the washing machine; a tub fixedly mounted in the cabinet; a drive unit including a drum rotatably mounted in the tub for receiving laundry to be washed and a motor for rotating the drum; a bearing housing having a bearing mounted at the tub for supporting the drive unit; at least one damper disposed between the bearing housing and the cabinet for performing shock-absorbing operation; a damper bracket fixedly attached to the bearing housing for transmitting vibration or impact to the at least one damper; and a revolute joint connection unit connected between the at least one damper and the damper bracket.

According to the present invention, multi-directional vibration or impact is absorbed by the cooperation of the bracket, the revolute joint connection unit, and the damper. Consequently, the present invention has the effect of more properly attenuating vibration or impact transmitted from the drum.

According to the present invention, the revolute joint connection unit is mounted in the washing machine. As a result, the damper is rotated about the joint pin, and therefore, the shock-absorbing operation is performed by the bushing, which is made of a resilient material, when multi-directional vibration or impact is transmitted to the damper. Consequently, the present invention has the effect of applying the damping force to the multi-directional vibration or impact.

According to the present invention, the shock-absorbing operation is performed by the resilient force of the bushing disposed at the outer circumferential surface of the lower part of the damper. Consequently, the present invention has the effect of maximizing the damping force in any directions.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a sectional view illustrating the interior structure of a conventional drum type washing machine;
FIG. 2 is a sectional view taken along line II-II of FIG. 1;
FIG. 3 is a sectional view illustrating the interior structure of the damper shown in FIG. 1;
FIG. 4 is a sectional view illustrating the interior structure of a washing machine according to the present invention;
FIG. 5 is an exploded perspective view illustrating a tub of the washing machine according to the present invention;
FIG. 6 is a sectional view illustrating a damper of the washing machine according to the present invention;
FIG. 7 is a view illustrating an example of the operation of the damper of the washing machine according to the present invention; and
FIG. 8 is a view illustrating another example of the operation of the damper of the washing machine according to the present invention.

### DESCRIPTION OF THE PREFERRED EMBODIMENTS

Now, preferred embodiments of the present invention will be described in detail with reference to the accompanying drawings. In the drawings, the same or similar elements are denoted by the same reference numerals even though they are depicted in different drawings, and a detailed description thereof will not be given.

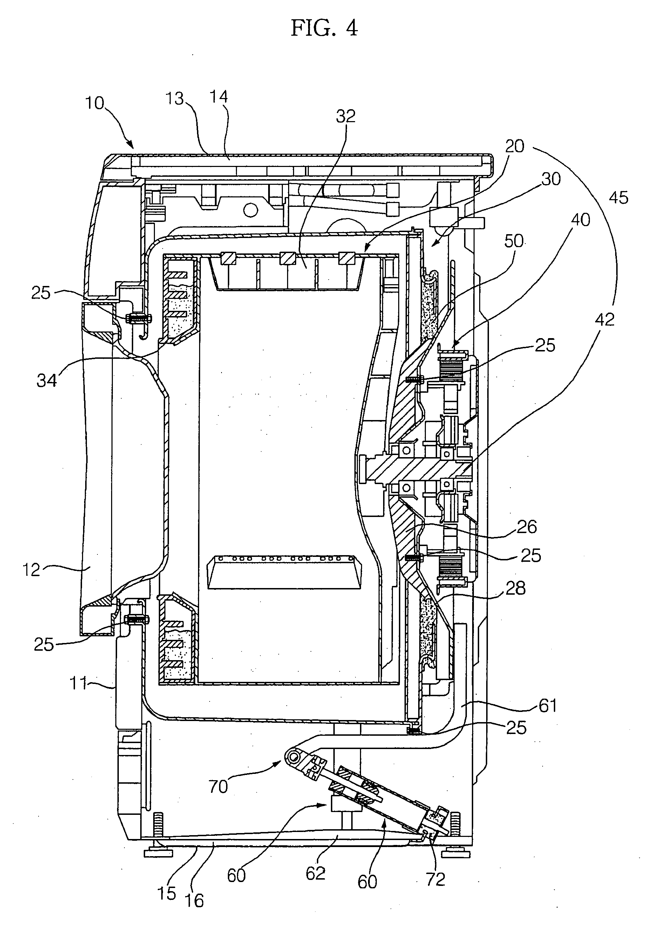

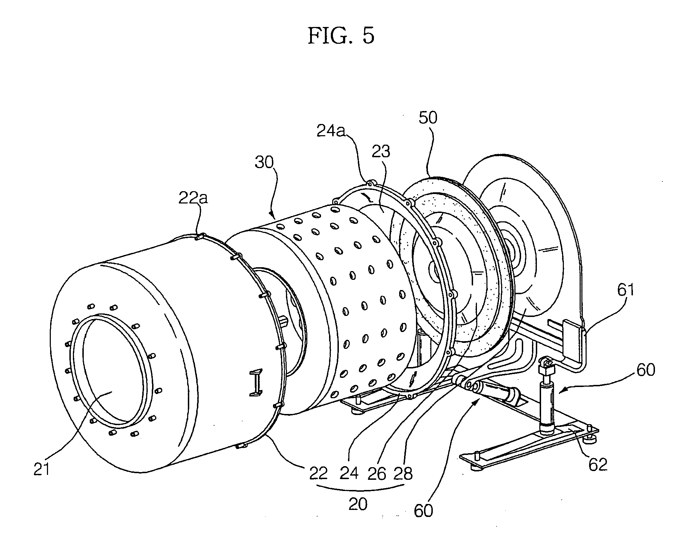

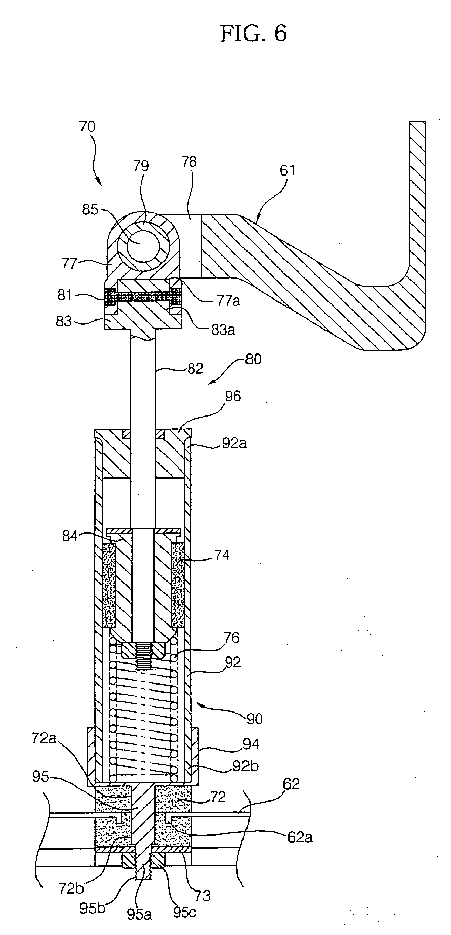

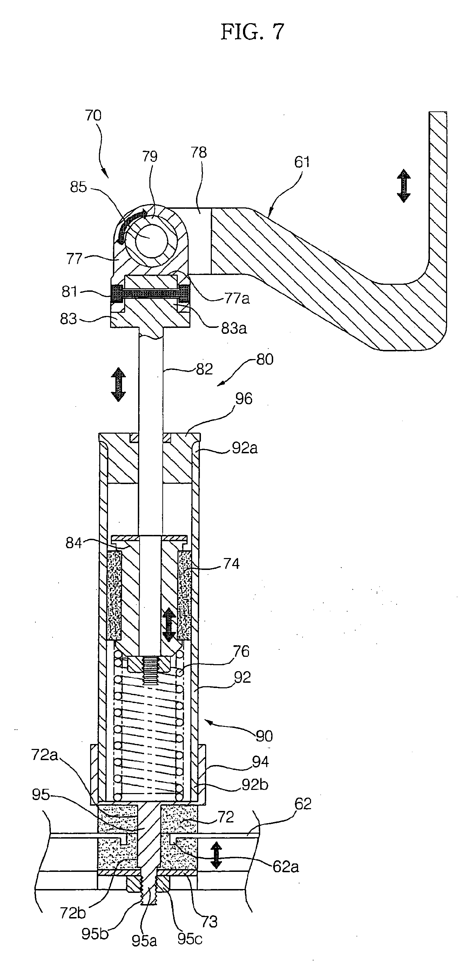

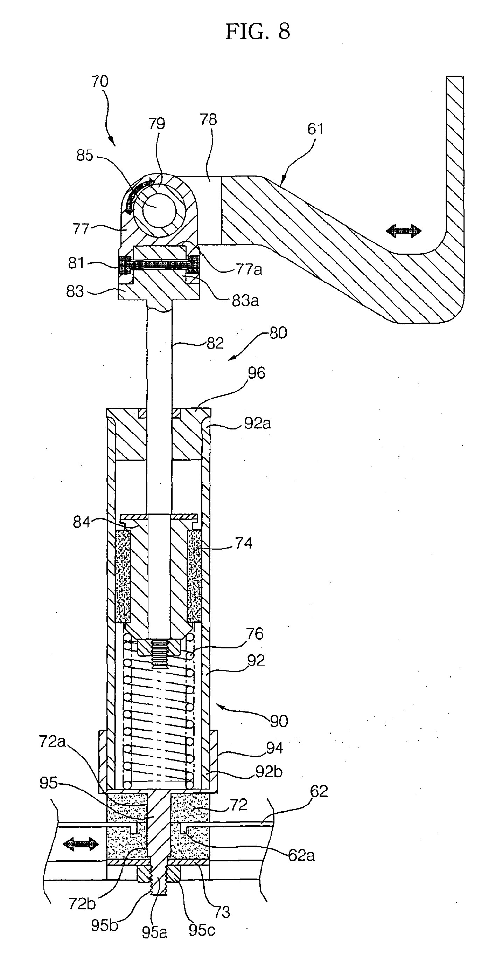

FIG. 4 is a sectional view illustrating the interior structure of a washing machine according to the present invention, FIG. 5 is an exploded perspective view illustrating a tub of the washing machine according to the present invention, FIG. 6 is a sectional view illustrating a damper of the washing machine according to the present invention, FIG. 7 is a view illustrating an example of the operation of the damper of the washing machine according to the present invention, and FIG. 8 is a view illustrating another example of the operation of the damper of the washing machine according to the present invention.

As shown in FIGS. 4 and 5, the washing machine according to the present invention comprises: a cabinet 10 forming the outer appearance of the washing machine; a tub 20 fixedly mounted in the cabinet 10 while being directly connected to the inside of the cabinet 10; a drum 30 rotatably mounted in the tub 20; a motor 40 mounted at the rear of the tub 20 for rotating the drum 30; a rear gasket 50 for sealing the tub 20 and interrupting transmission of vibration from the drum 30 to the rub 20; and dampers 60 mounted at the rear of the drum 30 for attenuating vibration or impact transmitted from the drum 30.

The cabinet 10 is provided at the front surface 11 thereof has with a hole (not shown), which is opened and closed by a door 12, which is hingedly connected at the front surface 11 of the cabinet 10. Also, the cabinet 10 has a top cover 14 disposed at the upper surface 13 thereof and a base 16 disposed at the lower surface 15 thereof. The dampers 60 are fixed to the base 16 of the cabinet 10.

The tub 20 comprises: a tub body 22 directly connected to the inside of the front surface 11 of the cabinet 10 such that the tub body 22 communicates with the hole opened and closed by the door 12; a tub cover 24 attached to the rear surface of the tub body 22 such that the tub cover 24 surrounds the drum 30, the tub cover 24 having an opening 23 defined in the center thereof; a tub bracket 26 for closing the opening 23 of the tub cover 24; and a bearing housing 28 mounted to the rear surface of the tub bracket 26 for supporting a motor shaft 42.

While an opening 21 of the tub body 22 is aligned with the hole formed at the front surface 11 of the cabinet 10, the tub body 22 is fixedly attached to the cabinet 10 by means of screws 25. At this time, the tub cover 24 is fixedly attached to the cabinet 10 while the drum 30 is inserted in the tub cover 24. The tub body 22 and the tub cover 24 are fixedly attached to each other by means of screws 25, which are inserted through fixing holes 22a and 24a formed at the outer circumference of the tub body 22 and the tub cover 24, respectively. The opening 23 of the tub cover 24 is sealed by the tub bracket 26 and the rear gasket 50, which will be described below in detail. The bearing housing 28 is fixedly attached to the rear surface of the tub bracket 26 by means of screws 25. The bearing housing 28 has a bearing (not shown) for supporting the motor shaft 42 such that the motor shaft 42 can be smoothly rotated. Consequently, the motor shaft 42 is rotated while being supported by the bearing.

The rear gasket 50 serves to absorb vibration or impact transmitted to the tub body 22 from the tub bracket 26 when a washing or dewatering operation is performed. To this end, the rear gasket 50 is made of a resilient material that can be compressed or expanded. Furthermore, the rear gasket 50 is disposed along the outer circumference of the tub bracket 26 for sealing the opening 23.

The motor 40 is mounted at the rear of the bearing housing 28. The motor shaft 42 is fixedly attached to the rear surface of the drum 30 through the bearing housing 28 and the tub bracket 26.

The drum 30 is a vibrating body rotated by the motor shaft 42, which is driven when electric current is supplied to the motor 20. At the inside surface of the drum 30 are attached a plurality of lifts 32 for lifting laundry in the drum 30. To the front surface of the drum 30 is attached a liquid balancer 34 for balancing the drum 30 to prevent the drum from being vibrated.

The dampers 60 are disposed between the drum 30 and the base 16. Each of the dampers 60 is connected to a damper bracket 61 mounted at the bearing housing 28 and a base bracket 62 mounted at the base 16, respectively. One of the dampers 60 is inclined to attenuate horizontal component force or inclined vibration or impact, and the other dampers 60 are vertically mounted to attenuate vertical vibration or impact.

As shown in FIG. 6, each of the dampers 60 comprises: a piston mechanism 80 connected to the damper bracket 61; a cylinder mechanism 90 connected to the base bracket 62; a revolute joint connection unit for connecting the damper bracket 61 and the piston mechanism 80; a friction member 74 fixed to either the piston mechanism 80 or the cylinder mechanism 90 for generating friction due to a relative motion; and a resilient member 76 for providing a resilient force to the piston mechanism 80.

The piston mechanism 80 comprises: a piston rod 82 connected to the damper bracket 61; a supporting plate 83 connected to one end of the piston rod 82, the supporting plate 83 having an increased radius; a damper hinge 77 fixed to the supporting plate 83 in the longitudinal direction of the piston rod 82 while being in tight contact with the supporting plate 83 by forcibly inserting a protrusion 83a protruded from the supporting plate 83 into an insertion groove 77a formed at the damper hinge 77; a bolt 81 inserted through the protrusion 83a and the insertion groove 77a for more securely fixing the piston rod 82 to the damper hinge 77; and a piston 84 connected to the other end of the piston rod 82.

In the illustrated embodiment, the protrusion 83a of the supporting plate 83 is forcibly inserted into the insertion groove 77a of the damper hinge 77. Alternatively, the supporting plate 83 may have an insertion groove while the damper hinge 77 may have a protrusion such that the protrusion of the damper hinge 77 is forcibly inserted into the insertion groove of the supporting plate 83. In any case, the bolt 81 may also be inserted through the protrusion of the damper hinge 77 and the insertion groove of the supporting plate 83 to more securely fix the piston rod 82 to the damper hinge 77.

One end of the damper bracket 61 is fixed to the bearing housing 28, and the other end of the damper bracket 61 is bent such that the other end of the damper bracket 61 is parallel with the lower end of the tub 20.

At the other end of the damper bracket 61 is formed a bracket hinge 78, which has a hole (not shown) communicating with a hole (not shown) of the damper hinge 77 such that the bracket hinge 78 is connected to the damper hinge 77 in a revolute joint fashion. The damper hinge 77 may be engaged with the bracket hinge 78 either while the damper hinge 77 surrounds the bracket hinge 78 or while the bracket hinge 78 surrounds the damper hinge 77.

The damper hinge 77 and the bracket hinge 78 are securely attached to each other by mean of a fixing unit, which comprises: a joint pin 85 inserted through the hole formed at the damper hinge 77 and the hole formed at the bracket hinge 78; and a cylindrical shock-absorbing member fitted on the outer circumferential surface of the joint pin 85.

Preferably, the shock-absorbing member is a bushing 79, which is made of a resilient material, such as rubber or synthetic resin. While the damper 60 is at a right angle to damper bracket 61, the joint pin 85, on which the bushing 79 is fitted, is forcibly inserted into the holes of the damper hinge 77 and the bracket hinge 78. Consequently, the damper 60 is securely fixed to the damper bracket 61 while the bushing 79 is compressed.

The friction member 74 is disposed at the outer circumferential surface of the piston 84 for generating friction on the inner circumferential surface of a cylinder body 92 of the cylinder mechanism 90. Preferably, the friction member 74 is made of sponge, rubber, or synthetic resin.

The cylinder mechanism 90 comprises: a damper holder 96, through which the piston rod 82 is inserted; a cylinder body 92 forming a moving channel of the piston 84, the cylinder body 92 having one end 92a partially fitted on the damper holder 96; and a body cap 94 securely attached to the other end 92b of the cylinder body 92 for sealing the cylinder body 92.

At the body cap 94 is formed a body cap rod 95, which extends in the direction in which the piston 84 is moved. The tip end 95a of the body cap rod 95 is protruded outward through a shock-absorbing member 72. At the tip end 95a of the body cap rod 95 are provided a fixing unit 95b and 95c, by which the shock-absorbing member 72 is securely fixed to the body cap 94. Preferably, the fixing unit 95b and 95c comprises: a thread part 95b formed at the tip end 95a of the body cap rod 95; and a nut 95c threadedly fitted on the thread part 95b.

The piston mechanism 80, which is moved due to vibration or impact, is supported by the cylinder mechanism 90 in a two-point supporting fashion. Specifically, the piston rod 82 is supported by the damper holder 96, and at the same time, the piston 84 is moved in the cylinder body 92 while the piston 84 is supported by the inner wall of the cylinder body 92. Consequently, the piston 84 is smoothly moved in the cylinder body 92.

Preferably, the shock-absorbing member 72 is a cylindrical bushing, which is made of a resilient material, such as rubber or synthetic resin. The cylindrical bushing 72 has an insertion hole 72a formed along the center thereof, through which the body cap rod 95 is inserted, and an engaging groove 72b formed at the circumferential surface thereof such that the base bracket 62 is engaged in the engaging groove 72b.

The bushing 72 is divided into two pieces such that the bushing 72 surrounds the upper and lower sides of the base bracket 62. At the upper and lower ends of the bushing 72 are disposed washers 73 for compressing the bushing 72, respectively.

The end of the base bracket 62 is connected to the shock-absorbing member 72 through the engaging groove 72b. At the base bracket 62 engaged in the engaging groove 72b is formed a latching protrusion 62a, which is bent from the base bracket 62.

The washers 73 are located at opposite ends of the shock-absorbing member 72, i.e., at the upper and lower ends of the shock-absorbing member 72, for protecting the bushing 72, which is made of a resilient material. In the accompanying drawings, only washer 73 located at the lower end of the shock-absorbing member 72, i.e., the lower washer 73, is indicated. The tip end 95a of the body cap rod 95 is inserted through the lower washer 73. Pressure is applied to the lower washer 73 by the nut 95c threadedly fitted on the thread part 95b such that the busing 72 is compressed.

The bushing 72 is located at the lower end of the body cap 94, and the lower washer 73 is located at the lower end of the bushing 72. After that, the nut 95c is threadedly fitted onto the tip end 95a of the body cap rod 95, which is inserted through the bushing 72 and the lower washer 73. Consequently, the bushing 72 is securely fixed to the body cap 94. At this time the base bracket 62 is fixed to the side of the bushing 72. As a result, shock generated due to the relative motion between the base bracket 62 and the body cap rod 95 is absorbed by the bushing 72.

Preferably, the resilient member 76 disposed in the cylinder body 92 is a coil spring for providing a resilient force to the piston 84. The resilient member 76 applies a resilient force to the piston 84, in the direction in which the friction is generated, to generate a damping force. The resilient member 76 may be omitted according to circumstances. It is preferable, however, that the resilient member 76 is used when a relatively large damping force is to be applied to the piston 84.

On the outer circumferential surface of the piston rod 82, which is moved through the damper holder 96, is coated a lubricant, such as grease, by which air is effectively prevented from being introduced into or discharged from the cylinder body 92 while the piston rod 82 is moved.

In order to add a damping force generated by air damping to the piston 84 moved in the cylinder body 92, the cylinder body 92 is sealed by the damper holder 96 and the body cap 94. The piston 84 is moved in the cylinder body 92 to compress air. The air compressed by the piston generates the air damping.

The damper 60 may be constructed without the provision of the resilient member according to circumstances. Furthermore, the piston mechanism 80 may be mounted at the base side, and the cylinder mechanism 90 may be mounted at the drum side.

The operation of the washing machine with the above-stated construction according to the present invention will be described hereinafter in detail with reference to FIGS. 7 and 8.

When vibration or impact is applied in the longitudinal direction of the piston rod 82, as show in FIG. 7, the vibration or the impact is transmitted to the revolute joint connection unit, i.e., the joint pin 85 inserted through the bracket hinge 78 and the damper hinge 77, through the damper bracket 61. As a result, the force is transmitted to the piston rod 82 by the damper hinge 77 rotated clockwise or counterclockwise about the joint pin 85 while the vibration or the impact is absorbed by the bushing 79 compressed on the outer circumferential surface of the joint pin 85. At this time, the vertical force is applied to the piston rod 82, and therefore, the piston 84 is vertically moved. Consequently, friction is generated between the friction member 74 fixed to the outer circumferential surface of the piston 84 and the inner wall of the cylinder body 92, and therefore, the vertical force is decreased by the damping force. Furthermore, the piston 84, which is vertically moved, is applied to the resilient force generated by the coil spring 76, and therefore, the resilient force generated by the coil spring 76 acts as the damping force to decrease the vertical force. Since the cylinder body 92 is sealed, the pressure of air compressed by the piston 84 acts as the damping force to attenuate the vibration or the impact transmitted through the piston 84. In addition, the body cap 94 is supported by the shock-absorbing member 72 mounted at the lower end of the body cap 94. Consequently, the shock-absorbing member 72 is vertically compressed or expanded to absorb the force transmitted through the cylinder mechanism 90.

When vibration or impact is applied in other directions, on the other hand, the vibration or the impact is absorbed by the revolute joint connection unit.

When vibration or impact is applied in the direction perpendicular to the longitudinal direction of the piston rod 82, for example, as show in FIG. 8, the vibration or the impact is transmitted to the joint pin 85 inserted through the bracket hinge 78 and the damper hinge 77, through the damper bracket 61. As a result, the force is transmitted to the piston rod 82 by the damper hinge 77 rotated clockwise or counterclockwise about the joint pin 85 while the vibration or the impact is absorbed by the bushing 79 compressed on the outer circumferential surface of the joint pin 85. At this time, the piston 84 is not vertically moved, but the cylinder mechanism 90 of the damper 60 is horizontally moved. As a result, the horizontal force is transmitted to the bushing 72 forming the outer circumferential surface of the cylinder body 92. Consequently, the bushing 72 is horizontally deformed to absorb the vibration or the impact.

As apparent from the above description, the washing machine according to the present invention has the following effects.

First, multi-directional vibration or impact is absorbed by the cooperation of the bracket, the revolute joint connection unit, and the damper. Consequently, the present invention has the effect of more properly attenuating vibration or impact transmitted from the drum.

Secondly, the revolute joint connection unit is mounted in the washing machine. As a result, the damper is rotated about the joint pin, and therefore, the shock-absorbing operation is performed by the bushing, which is made of a resilient material, when multi-directional vibration or impact is transmitted to the damper. Consequently, the present invention has the effect of applying the damping force to the multi-directional vibration or impact.

Thirdly, the shock-absorbing operation is performed by the resilient force of the bushing disposed at the outer circumferential surface of the lower part of the damper. Consequently, the present invention has the effect of maximizing the damping force in any directions.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A washing machine comprising:
at least one damper (60) disposed between a drive part of the washing machine and a cabinet (10) for performing shock-absorbing operation;
a damper bracket (61) fixedly attached to the drive part for transmitting vibration or impact to the at least one damper (60); and
a revolute joint connection unit connected between the at least one damper (60) and the damper bracket (61).

2. The machine as set forth in claim 1, wherein the at least one damper (60) is vertically mounted or inclined.

3. The machine as set forth in claim 1, wherein the at least one damper (60) comprises:
a piston mechanism (80) connected to the damper bracket (61) via the revolute joint connection unit;
a cylinder mechanism (90) connected to the cabinet (10);
a friction member (74) fixed to either the piston mechanism (80) or the cylinder mechanism (90) for generating friction due to a relative motion; and
a resilient member (76) for providing a resilient force to the piston mechanism (80).

4. The machine as set forth in claim 1, wherein the revolute joint connection unit comprises:
a damper hinge (77) provided at the at least one damper (60);
a bracket hinge (78) provided at the damper bracket (61) such that the bracket hinge (78) is engaged with the damper hinge (77); and
a fixing unit for fixing the damper hinge (77) and the bracket hinge (78).

5. The machine as set forth in claim 4, wherein the fixing unit comprises:
a joint pin (85) inserted through the damper hinge (77) and the bracket hinge (78); and
a shock-absorbing member (79) fitted on the outer circumferential surface of the joint pin (85).

6. The machine as set forth in claim 5, wherein the shock-absorbing member (79) is a rubber bushing.

7. The machine as set forth in claim 4, wherein the damper hinge (77) is either forcibly inserted into the damper (60) or fixedly attached to the at least one damper (60) by means of a bolt.

8. The machine as set forth in claim 4, wherein the bracket hinge (78) is engaged with the damper hinge (77) such that the at least one damper (60) is approximately at a right angle to the damper bracket (61).

9. The machine as set forth in claim 1, further comprising:
a base bracket (62) mounted at the lower end of the cabinet (10);
a shock-absorbing member (72) attached to the lower end of the at least one damper (60); and
a fixing unit provided at the at least one damper (60) for securely fixing the shock-absorbing member (72) to the at least one damper (60).

10. A washing machine comprising:
a cabinet (10) forming the outer appearance of the washing machine;
a tub (20) fixedly mounted in the cabinet (10);
a drive unit including a drum (30) rotatably mounted in the tub (20) for receiving laundry to be washed and a motor (40) for rotating the drum (30);
a bearing housing (28) having a bearing mounted at the tub (20) for supporting the drive unit;
at least one damper (60) disposed between the bearing housing (28) and the cabinet (10) for performing shock-absorbing operation;
a damper bracket (61) fixedly attached to the bearing housing (28) for transmitting vibration or impact to the at least one damper (60); and
a revolute joint connection unit connected between the at least one damper (60) and the damper bracket (61).
